# EUROPÄISCHE PATENTANMELDUNG

(11) **EP 1 755 048 A1**
(43) Veröffentlichungstag der Anmeldung: **21.02.2007**
(21) Anmeldenummer: 05017921.7
(22) Anmeldetag: 18.08.2005
(51) Int. Cl.: G06F 17/30, H04L 29/08

(54) **Verfahren zur Übermittlung von Informationen von einem Informationsserver an einen Client**

(71) Anmelder: HURRA Communications GmbH, 70599 Stuttgart (DE)
(72) Erfinder: Schweier, René, 70599 Stuttgart (DE)
(74) Vertreter: Dreiss, Fuhlendorf, Steimle & Becker

(57) **Zusammenfassung**

Bei der Übermittlung von Informationen mittels eines Kommunikationsnetzwerks (2) in einem Client-Server-System (1a) von einem ersten Informationsserver (3) an einen Client (9), dem ein Profil (15) zugeordnet ist, sollen die Ressourcen des Client-Server-Systems (1a) sowie des Kommunikationsnetzwerks (2) möglichst gering belastet werden. Hierzu soll die Relevanz der Informationen erhöht werden. Hierzu wird vorgeschlagen, dass mindestens ein zweiter Informationsserver (6) mit dem Kommunikationsnetzwerk (2) verbunden ist, das Profil (15) von einem mit dem Kommunikationsnetzwerk (2) verbundenen Profilserver (13) erstellt wird und zur Erstellung des Profils (15) mindestens eine Profilinformation ausgewertet wird, wobei die Profilinformation in Abhängigkeit mindestens einer Eigenschaft einer von dem zweiten Informationsserver (6) an den Client (9) übermittelten Netzwerkseite (8) ermittelt wird.

## Beschreibung

Die Erfindung betrifft ein Verfahren zur Übermittlung von Informationen von einem ersten Informationsserver an einen Client, wobei
- der erste Informationsserver und der Client mit einem Kommunikationsnetzwerk verbunden sind;
- dem Client ein Profil zugeordnet wird;
- mindestens ein Zusatzinformationsserver mit dem Kommunikationsnetzwerk verbunden ist;
- durch den Zusatzinformationsserver mindestens eine Zusatzinformation zum Abruf bereitstellt wird;
- mittels des Client von dem ersten Informationsserver eine Netzwerkseite über das Kommunikationsnetzwerk angefordert wird;
- in Abhängigkeit von dem dem Client zugeordneten Profil eine Zusatzinformation ausgewählt wird; und
- die angeforderte erste Netzwerkseite und die Zusatzinformation an den Client übermittelt werden.

Die Erfindung betrifft auch ein Client-Server-System umfassend einen einem Benutzer zugeordneten Client, einen ersten Informationsserver, einen Zusatzinformationsserver und ein Kommunikationsnetzwerk, mittels dessen eine Kommunikation zwischen dem Client und dem ersten Informationsserver möglich ist, wobei
- das Client-Server-System Mittel zur Zuordnung eines Profils zu dem Client aufweist,
- der Zusatzinformationsserver mit dem Kommunikationsnetzwerk verbunden ist;
- der Zusatzinformationsserver mindestens eine Zusatzinformation zum Abruf bereitstellt;
- der Client Mittel aufweist, um von dem ersten Informationsserver eine erste Netzwerkseite über das Kommunikationsnetzwerk anzufordern;
- das Client-Server-System Mittel aufweist, um eine Zusatzinformation in Abhängigkeit von dem dem Client zugeordneten Profil auszuwählen; und
- das Client-Server-System Mittel aufweist, um die angeforderte erste Netzwerkseite mit der Zusatzinformation von dem ersten Server an den Client zu übermitteln.

Die Erfindung betrifft auch einen Profilserver in einem Client-Server-System, wobei
- das Client-Server-System einen einem Benutzer zugeordneten Client, einen ersten Informationsserver, einen Zusatzinformationsserver und ein Kommunikationsnetzwerk umfasst;
- der Profilserver Mittel zur Zuordnung eines Profils zu dem Client aufweist;
- der Zusatzinformationsserver mit dem Kommunikationsnetzwerk verbunden ist;
- der Zusatzinformationsserver mindestens eine Zusatzinformation zum Abruf bereitstellt;
- der Client Mittel aufweist, um von dem ersten Informationsserver eine erste Netzwerkseite über das Kommunikationsnetzwerk anzufordern;
- das Client-Server-System Mittel aufweist, um eine Zusatzinformation in Abhängigkeit von dem dem Client zugeordneten Profil auszuwählen;
- und das Client-Server-System Mittel aufweist, um die angeforderte erste Netzwerkseite mit der Zusatzinformation von dem ersten Server an den Client zu übermitteln.

Die Erfindung betrifft schließlich auch ein Computerprogramm, das auf einem Client-Server-System, insbesondere auf einem Client und/oder einem Server, ablauffähig ist.

Eine Vielzahl von Clients und Servern kommuniziert mittels des Internets. Diese bilden in ihrer Gesamtheit ein multimediales Informationssystem, das sogenannte WWW (World Wide Web). Innerhalb des WWW zur Verfügung gestellte Netzwerkseiten sind mittels einer URL (Uniform Ressource Locator) adressierbar. Eine URL ist unter anderem aus dem Namen des die Netzwerkseite zur Verfügung stellenden Servers, einem (zumindest virtuellen) Verzeichnis und einem der Netzwerkseite, beispielsweise einem sogenannten HTML-Dokument, zugeordneten Namen zusammengesetzt. Eine URL erlaubt es, die dieser URL zugeordnete Netzwerkseite von einem Client aus anzuwählen. Dazu gibt ein Benutzer beispielsweise mittels einer Tastatur die URL in einem speziellen Eingabefeld eines auf dem Client ablaufenden Computerprogramms, eines sogenannten Browsers, ein. Der Client generiert daraufhin eine Anfrage an den entsprechenden Server, der wiederum die angeforderte Netzwerkseite an den Client übermittelt. Dort wird die übermittelte Netzwerkseite mittels des Browsers interpretiert und über ein dem Client zugeordnetes Display dem Benutzer darstellt.

Zur Beschreibung des Inhalts einer Netzwerkseite wird eine Seitenbeschreibungssprache verwendet. Heutzutage wird dazu überwiegend die standardisierte Seitenbeschreibungssprache HTML (Hypertext Mark-up Language) eingesetzt. HTML erlaubt es, auf einfache Weise den Inhalt und das Aussehen einer Netzwerkseite in einem sogenannten HTML-Dokument zu beschreiben. Fordert beispielsweise ein Client Informationen von einem Server an, so übermittelt der Server ein die angeforderten Informationen enthaltendes HTML-Dokument an den Client. Sollen die dem Client mittels des HTML-Dokuments übermittelten Informationen einem Benutzer dargestellt werden, so wird die Netzwerkseite beziehungsweise das HTML-Dokument dem Browser zugeführt.

Eine URL kann statt einer Netzwerkseite auch einem ausführbaren Computerprogramm auf dem Server zugeordnet sein. Ein derartiges Computerprogramm ist beispielsweise ein sogenanntes perl-script. Ein perl-script ist eine in der Programmiersprache per1 codierte Abfolge von Anweisungen. Ruft ein Client eine URL auf, die einem derartigen Computerprogramm zugeordnet ist, so wird dieses Computerprogramm auf dem Server ausgeführt. Die Ausführung des Computerprogramms kann auch eine Übermittlung von Informationen an den Client, beispielsweise in der Form einer Netzwerkseite, vorsehen. Selbstverständlich kann das Computerprogramm auch in einer anderen Sprache, insbesondere in einer anderen Script-Sprache, beispielsweise als java-script, realisiert sein.

In einem HTML-Dokument ist es möglich, URLs weiterer Netzwerkseiten beziehungsweise HTML-Dokumente anzugeben. Derartige URLs werden als Verweis oder als Link bezeichnet. Ein Link ist ein aktivierbarer Verweis. Werden Links mittels eines Browsers einem Benutzer dargestellt, so hat der Benutzer die Möglichkeit, einen dargestellten Link anzuwählen bzw. zu aktivieren und sich die der angewählten URL entsprechende Netzwerkseite anzeigen zu lassen. Dabei ist es insbesondere möglich, dass sich die angewählte Netzwerkseite auf einem anderen Server befindet.

Ein Informationsserver kann beispielsweise jeder sogenannte Web-Server sein. Ein Web-Server ist ein Server, der in dem WWW Informationen zum Abruf bereithält. Ein Informationsserver ist beispielsweise auch ein Server, der aktuelle Nachrichten bereithält. Derartige Server werden beispielsweise von den Anbietern großer Tageszeitungen oder Wochenzeitschriften betrieben.

Ein Informationsserver wird insbesondere auch in Form einer sogenannten Suchmaschine realisiert. Eine Suchmaschine ist ein mit dem Kommunikationsnetzwerk verbundener Server, an den der Benutzer mittels des Client eine Anfrage in Form eines Suchbegriffes sendet. Die Suchmaschine ermittelt anhand vorgebbarer Regeln in Abhängigkeit von dem übermittelten Suchbegriff Informationen, die mit dem Suchbegriff assoziiert werden. Die Suchmaschine veranlasst, dass die so ermittelten Informationen (das Suchergebnis) mittels einer Netzwerkseite an den Client übermittelt werden. Dazu wird häufig in Abhängigkeit von den ermittelten Informationen automatisiert ein HTML-Dokument dynamisch durch den Server erzeugt, das schließlich an den Client übermittelt und dem Benutzer mittels des Browsers angezeigt wird. Häufig werden auf den von einer Suchmaschine in Abhängigkeit einer Anforderung von Informationen erzeugten Netzwerkseiten Zusatzinformationen, beispielsweise in Form sogenannter Werbebanner, dargestellt. Die Zusatzinformation kann von dem Informationsserver selbst oder von einem Zusatzinformationsserver eines speziellen Dienstleisters über das Kommunikationsnetzwerk zur Verfügung gestellt werden. Es ist bekannt, dass die Auswahl der Zusatzinformation in Abhängigkeit von dem eingegebenen Suchbegriff erfolgt.

Eine Zusatzinformation kann beispielsweise mit einem Link versehen sein. Eine Aktivierung des Links durch den Client bzw. durch einen Benutzer, dem der Client zugeordnet ist, kann beispielsweise die Anforderung einer anderen von dem ersten Informationsserver bereitgestellten Netzwerkseite bewirken.

Die Zusatzinformation kann auch mit einem Link derart versehen sein, dass eine Aktivierung des Links die Ausführung eines auf dem ersten Informationsserver abgelegten Computerprogramms, beispielsweise eines Skripts, bewirkt. Ein derartiges Skript kann beispielsweise als Perl-Skript realisiert sein.

Die Übermittlung der Zusatzinformation zusammen mit der Netzwerkseite von dem ersten Informationsserver an den Client kann auch die Übermittlung eines Skripts, beispielsweise eines sogenannten Java-Skripts bewirken. Eine Aktivierung des Links führt dann zu einer Ausführung des Skripts auf dem Client.

In Abhängigkeit von der Ausführung des Skripts können weitere Aktionen ausgeführt werden. Beispielsweise können auf dem Informationsserver statistische Daten bezüglich des Abrufens einer bestimmten Netzwerkseite erhoben werden oder es können weitere Netzwerkseiten durch den Client angefordert bzw. an diesen übermittelt werden.

Übermittelt der Informationsserver eine Netzwerkseite an den Client, so kann der Informationsserver ferner ein sogenanntes Cookie an den Client übermitteln. Ein Cookie ist ein Menge von Informationen, die in einem dem Client zugeordneten Speicherbereich abgespeichert wird. Man spricht hier auch vom "Setzen eines Cookies". Es kann vorgesehen sein, dass automatisch ein Cookie gesetzt wird, wenn der Client einen auf einer Netzwerkseite dargestellten Link aktiviert. Fordert der Client erneut eine Netzwerkseite von dem Informationsserver an, so kann ferner vorgesehen sein, dass das Cookie zusammen mit der Anforderung von dem Client an den Informationsserver übermittelt wird. Ein Cookie ist üblicherweise derart realisiert, dass es nur an den Informationsserver zurückgeschickt werden kann, der den Client zum Setzen des Cookies veranlasst hat.

In einem Cookie können insbesondere auch Profilinformation abgespeichert werden, also beispielsweise wie häufig ein Benutzer, dem der Client zugeordnet ist, eine bestimmte Netzwerkseite aufruft oder wann er die Netzwerkseite zuletzt aufgerufen hat.

Es ist bekannt, die von einem Informationsserver bereitgestellten Netzwerkseiten zu klassifizieren. Dies kann beispielsweise anhand des thematischen Inhalts der Netzwerkseite erfolgen. Profile können dann dahingehend erstellt werden, dass eine Aussage darüber getroffen werden kann, für welche Themen sich ein Benutzer besonders interessiert.

Ist der Informationsserver als eine Suchmaschine ausgebildet, so kann das Profil des Benutzers in Abhängigkeit der von diesem eingegebenen Suchbegriffe erfolgen. Durch eine Auswertung des Profils kann der Informationsserver veranlassen, dass dem Benutzer bzw. dem dem Benutzer zugeordneten Client nur derartige Zusatzinformationen übermittelt werden, die seinem Profil entsprechen. Dabei können beispielsweise die Zusatzinformationen entsprechend klassifiziert sein.

Mittels einer derartigen Auswahl von Zusatzinformationen ist es möglich, die Relevanz der dem Benutzer übermittelten Zusatzinformationen zu erhöhen. Damit kann einerseits eine Verringerung der Menge der über das Kommunikationsnetzwerk zu übertragenden Daten erreicht werden. Andererseits kann eine Schonung der Rechenleistung des Informationsservers erreicht werden.

Beispielsweise handelt es sich bei dem Informationsserver um eine Produktsuchmaschine, bei der ein Benutzer typischerweise in Abhängigkeit von unterschiedlichen Kriterien ein oder mehrere Produkte sucht. Die unterschiedlichen Kriterien wie Preisspanne, Hersteller, Produktart, etc. können mittels Suchbegriffen eingegeben werden. Die Produktsuchmaschine wertet die Suchbegriffe aus und übermittelt eine Ergebnisliste an den dem Benutzer zugeordneten Client. Zusätzlich kann die Produktsuchmaschine eine Zusatzinformation übermitteln. Die Zusatzinformation kann beispielsweise ähnliche Produkte beschreiben, thematisch verwandte Sonderangebote darstellen, Vergleiche mit ähnlichen Produkten darstellen oder Zubehör anbieten. Zeigt das Benutzerprofil, dass der Benutzer zu einem früheren Zeitpunkt nach Gesundheitsprodukten gesucht hat, kann daraus geschlossen werden, dass der Benutzer auf seine Gesundheit achtet. Zusammen mit nun gesuchten Produkten können dann Zusatzinformationen von dem Server an den Client übermittelt werden, die Tests der dargestellten Produkte unter gesundheitlichen Aspekten beinhalten, beziehungsweise auf andere Netzwerkseiten verweisen, die derartige Informationen beinhalten.

Werden dem Benutzer also relevante Zusatzinformationen angeboten, so muss sich dieser diese Informationen nicht selbst suchen, was üblicherweise mehrere Übertragungen von Informationen zwischen dem Client und einem oder mehreren Informationsservern und damit eine vermeidbare Belastung des Kommunikationsnetzwerks und der Informationsserver bedeuten würde.

Das bekannte Verfahren hat jedoch den Nachteil, dass die von dem Informationsserver erstellten Profile nur sehr ungenau sind, da für die Erstellung der Profile nur wenige Informationen ausgewertet werden können und diese häufig nicht mehr einer aktuellen Situation entsprechen. Beispielsweise können Interessen eines Benutzers sehr schnell ändern oder ein gesuchtes Produkt wurde inzwischen erworben, weshalb auf diesen Suchergebnissen basierende Profile nicht mehr aktuell sind.

Es ist deshalb Aufgabe der Erfindung ein Verfahren zu schaffen, das eine Erhöhung der Relevanz der an einen Client übermittelten Zusatzinformationen ermöglicht und somit eine Schonung von Ressourcen sowohl eines Kommunikationsnetzwerks durch eine Verringerung der über das Kommunikationsnetzwerk zu übermittelten Informationen einerseits und eine Verringerung der Auslastung von Informationsservern andererseits ermöglicht.

Insbesondere soll durch die Erhöhung der Relevanz der an einen Client übermittelten Zusatzinformationen eine Verringerung der sogenannten online-Zeit erreicht werden, wobei die online-Zeit die Zeit beschreibt, die ein Benutzer damit verwendet, mittels des ihm zugeordneten Clients Informationen mit einem oder mehreren Informationsservern auszutauschen.

Die Aufgabe wird erfindungsgemäß dadurch gelöst, dass mindestens ein zweiter Informationsserver mit dem Kommunikationsnetzwerk verbunden ist, das Profil von einem mit dem Kommunikationsnetzwerk verbundenen Profilserver erstellt wird und zur Erstellung des Profils mindestens eine Profilinformation ausgewertet wird, wobei die Profilinformation in Abhängigkeit mindestens einer Eigenschaft einer von dem zweiten Informationsserver an den Client übermittelten Netzwerkseite ermittelt wird.

Das Profil wird erfindungsgemäß von einem mit dem Kommunikationsnetzwerk verbundenen Profilserver erstellt. Dabei werden nicht nur Profilinformationen des ersten Informationsservers verwendet, sondern es werden auch Profilinformationen des zweiten Informationsservers verwendet. Dadurch ist es möglich, dass die Profile mit höherer Genauigkeit erstellt werden können. Damit wiederum kann eine Auswahl der von dem ersten Informationsserver an den Client zu übermittelnden Zusatzinformationen mit höherer Präzision erfolgen, was zu einer höheren Relevanz der Zusatzinformation führt.

Das erfindungsgemäße Verfahren hat damit nicht nur den Vorteil, dass besonders viele Informationen für die Erstellung bzw. Aktualisierung eines Profils zur Verfügung stehen, sondern auch, dass ein Profil eine sehr hohe Aktualität hat, da die Frequenz der Erfassung von Profilinformationen dadurch erhöht wird, dass das Profil nicht nur aufgrund von Profilinformationen des ersten Informationsservers sondern insbesondere auch aufgrund von Profilinformationen des zweiten Informationsservers erstellt wird.

Dies ermöglicht es, besonders schnell und flexibel und unter Berücksichtigung einer aktuellen Situation des Benutzers diesem eine Zusatzinformation mittels einer angeforderten Netzwerkseite darzustellen.

Ferner ermöglicht es das erfindungsgemäße Verfahren, dass die Zusatzinformation nicht nur auf Netzwerkseiten, die von dem Informationsserver, über den die Profilinformationen ermittelt wurden, hier beispielsweise dem zweiten Informationsserver, sondern auch auf Netzwerkseiten, die von anderen Informationsservern, hier beispielsweise dem ersten Informationsserver, an den Client übermittelt werden, dargestellt werden können. Damit wiederum wird eine besonders schnelle und zeitnahe Versorgung des Benutzers bzw. des Clients mit relevanter Information gewährleistet. Der Benutzer hat folglich keine Veranlassung, das Kommunikationsnetzwerk einerseits, sowie einen Informationsserver andererseits, dadurch zu belasten, dass nach dieser Zusatzinformation gesucht wird.

Vorzugsweise ist der erste und/oder zweite Informationsserver als eine Suchmaschine, eine Produktsuchmaschine, ein online-shop, ein online-forum oder ein Newsserver ausgebildet.

Diese Arten von Informationsservern haben den Vorteil, für die Erstellung von Profilen besonders relevante Profilinformationen erfassen und an den Profilserver übermitteln zu können. Beispielsweise kann der Profilserver aus Profilinformationen, die über einen online-shop gekaufte bzw. nicht gekaufte Waren beschreiben, Vorlieben des Benutzers ermitteln. Über ein online-forum können Informationen über den Benutzer interessierende Themen ermittelt werden. Ein Newsserver hält aktuelle Informationen zu unterschiedlichen Themen bereit. Ein Benutzer kann beispielsweise unterschiedliche Themen abonnieren. Anhand der abonnierten Themen ist es möglich, weitere Informationen für die Erstellung des Benutzerprofils zu erhalten. Der Informationsserver kann insbesondere als jede Art von Web-Server ausgebildet sein.

Vorteilhafterweise wird der Profilinformation eine Bedingung zugeordnet und die Profilinformation für die Erstellung des Profils nur dann berücksichtigt, wenn die Profilinformation die Bedingung erfüllt.

Durch die Vorgabe einer Bedingung kann die Qualität eines Profils und damit die Relevanz von anhand des Profils ermittelter Zusatzinformation weiter erhöht werden.

Beispielsweise wird die Bedingung durch einen Zeitpunkt, einen Zeitraum, eine Kennung eines Informationsservers oder eine Art eines Informationsservers beschrieben.

Durch eine derartige Bedingung kann eine besonders hohe Aktualität des Profils erreicht werden, da veraltete Profilinformationen nicht mehr für die Erzeugung bzw. die Aktualisierung des Profils herangezogen werden. Im folgenden soll die Erzeugung eines Profils stets auch die Aktualisierung des Profils umfassen. Beispielsweise kann vorgesehen sein, eine Produktsuche, die vor mehr als zwanzig Tagen erfolgt ist, nicht mehr bei der Erzeugung des Profils zu berücksichtigen. Oder es kann vorgesehen sein, eine Profilinformation eines durch eine Kennung identifizierbaren Informationsservers bei der Erzeugung des Profils nicht zu verwenden. Ist dem Informationsserver eine Art zugeordnet, so kann beispielsweise vorgesehen sein, eine Profilinformation eines Newsserver nicht zu verwenden, wohingegen die Profilinformation einer Suchmaschine für die Erzeugung des Profils verwendet werden soll.

Insbesondere können einer Profilinformation mehrere Bedingungen zugeordnet sein. So kann beispielsweise festegelegt werden, Profilinformationen einer Produktsuchmaschine nur innerhalb von zehn Tagen ab Ermittlung der Profilinformation bei der Erzeugung des Profils zu berücksichtigen, wohingegen die Profilinformation, die von einem online-forum ermittelt wurde, innerhalb von dreißig Tagen ab deren Ermittlung zu verwenden. Damit kann folglich eine besonders hohe Flexibilität und damit eine besonders hohe Aktualität eines Profils erreicht werden.

Vorzugsweise beschreibt die mindestens eine Eigenschaft der von dem zweiten Server an den Client übermittelten Netzwerkseite einen Inhalt, einen Ursprung, eine Zeitdauer, eine durchgeführte Aktion oder eine nicht durchgeführte Aktion.

Der Inhalt einer Netzwerkseite kann beispielsweise mittels einer vorherigen Klassifikation der von dem zweiten Informationsserver bereitgestellten Netzwerkseiten erreicht werden. Der Ursprung einer übermittelten Netzwerkseite kann eine vorausgehende Aktion beschreiben, die die Übermittlung der Netzwerkseite an den Client ausgelöst hat. Insbesondere kann mittels des Ursprungs festgestellt werden, welche Netzwerkseite zuvor von dem Client aufgerufen wurde. Wurde die Netzwerkseite aufgrund eines auf einer anderen Netzwerkseite dargestellten Links von dem Client angefordert, so kann beispielsweise mittels eines sogenannten referrers die URL der vorausgehenden Netzwerkseite ermittelt werden. Dies ermöglicht es insbesondere auch den Informationsserver, der die vorausgehende Netzwerkseite an den Client übermittelt hat, zu ermitteln.

Die Zeitdauer beschreibt beispielsweise die Zeit zwischen der Anforderung einer Netzwerkseite und der Anforderung einer weiteren, von dem Informationsserver oder einem weiteren Informationsserver bereitgestellten Netzwerkseite. Aus der Zeitdauer kann darauf geschlossen werden, ob der Benutzer sich die auf der Netzwerkseite dargestellten Informationen näher angesehen hat, diese also von prinzipiellem Interesse sein könnten, oder ob der Benutzer innerhalb eines sehr kurzen Zeitraums eine weitere Netzwerkseite angefordert hat, die Netzwerkseite folglich von eher geringer Relevanz für den Benutzer war.

Eine durchgeführte Aktion kann beispielsweise das Aktivieren eines auf einer an den Client übermittelten Netzwerkseite dargestellten Links sein. Entsprechend kann eine nicht durchgeführte Aktion das Nicht-Aktivieren eines auf der Netzwerkseite dargestellten Links sein. Unter einer Aktion kann ferner eine Zusammenfassung mehrerer Unteraktionen verstanden werden. Ist der zweite Informationsserver beispielsweise als ein online-shop ausgebildet, so kann eine durchgeführte bzw. nicht durchgeführte Aktion den ausgeführten bzw. den nicht ausgeführten Kauf eines Produkts beschreiben.

Diese Eigenschaften sind besonders geeignet, Profilinformationen zu generieren, die in ein Profil aufgenommen werden können.

Das Profil kann beispielsweise mittels eines Expertensystems in Abhängigkeit von den Eigenschaften der von dem zweiten Informationsserver angeforderten Netzwerkseite erstellt. Ein Expertensystem beschreibt die Anordnung und Gewinnung von Wissen im Rahmen der sogenannten Künstlichen Intelligenz. Ein Expertensystem ist beispielsweise als sogenanntes regelbasiertes Expertensystem ausgeführt. Hierbei wird durch Abarbeitung von vorgebbaren Regeln eine Entscheidung generiert bzw. im vorliegenden Fall ein Profil erstellt. Dies ermöglicht es, bei der Erstellung des Profils sämtliche zur Verfügung stehenden Eigenschaften zu berücksichtigen und in einer Art Entscheidungsbaum in Abhängigkeit von den Eigenschaften und gegebenenfalls der den Profilinformationen zugeordneten Bedingungen das Profil zu erstellen.

Auch die darzustellende Zusatzinformation kann vorteilhaft mittels eines Expertensystems in Abhängigkeit von dem erstellten Profil ausgewählt. Ist das Expertensystem als regelbasiertes Expertensystem ausgebildet, kann durch Abarbeitung von vorgebbaren Regeln die Zusatzinformation ausgewählt werden. Dies kann beispielsweise in einer Art Entscheidungsbaum in Abhängigkeit von den einzelnen Parametern des Profils erfolgen.

In einer vorteilhaften Weiterbildung des Verfahrens fordert der erste Informationsserver die Übermittlung des Profils von dem Profilserver an, der Profilserver übermittelt das Profil an den Informationsserver und der Informationsserver wählt anhand des Profils eine geeignete Zusatzinformation aus. Hierbei kann der Informationsserver beispielsweise auch die Funktionalität des Zusatzinformationsservers aufweisen. Dazu kann dem Informationsserver eine Datenbank zugeordnet sein, in der die Zusatzinformationen abgespeichert sind. Der Zusatzinformationsserver kann also insbesondere auch als Software ausgebildet sein.

Dies hat den Vorteil, dass der Informationsserver besonders flexibel und unabhängig von dem Profilserver Regeln für die Auswahl der Zusatzinformationen erstellen und implementieren kann.

Gemäß einer anderen vorteilhaften Weiterbildung der Erfindung fordert der erste Informationsserver von dem Profilserver die Zusatzinformation an, wobei der Profilserver die Zusatzinformation in Abhängigkeit von dem Profil auswählt.

Die Auswahl einer geeigneten Zusatzinformation wird gemäß dieser Ausführungsform folglich von dem Profilserver durchgeführt. Dies hat den Vorteil, dass die für die Auswahl notwendige Intelligenz alleine bei dem Profilserver vorhanden sein muss. Ferner wird das Kommunikationsnetzwerk geringer belastet, da keine Übertragung eines Profils von dem Profilserver an einen Informationsserver erfolgt. Zur Auswahl ist es vorstellbar, dass die Zusatzinformationen selbst oder Informationen, die eine Identifizierung der auf einem Zusatzinformationsserver abgelegten Zusatzinformation ermöglichen, in einer dem Profilserver zugeordneten Datenbank abgelegt sind.

Gemäß einer weiteren vorteilhaften Ausführungsform wird das Profil an den Zusatzinformationsserver übermittelt und die Auswahl der Zusatzinformationen von dem Zusatzinformationsserver in Abhängigkeit von dem übermittelten Profil durchgeführt.

Hierbei kann der Profilserver völlig unabhängig von den zur Verfügung stehenden Zusatzinformationen betrieben werden. Für die Auswahl einer geeigneten Zusatzinformation wird das Profil an den Zusatzinformationsserver übermittelt, der in Abhängigkeit von dem Profil die Auswahl einer geeigneten Zusatzinformation vornimmt.

Zur Übermittlung der ausgewählten Zusatzinformation veranlasst der Profilserver beispielsweise, dass eine die ausgewählte Zusatzinformation identifizierende Information an den Informationsserver übermittelt wird. Dies kann einerseits dadurch erfolgen, dass die Zusatzinformation direkt an den Informationsserver übermittelt wird. Es ist andererseits auch möglich, dass der Profilserver beispielsweise eine URL an den Informationsserver übermittelt, unter der die Zusatzinformation von dem Zusatzinformationsserver abrufbar ist. Dies ist insbesondere vorteilhaft, wenn die Zusatzinformation nicht direkt auf der Netzwerkseite dargestellt werden soll, sondern lediglich als Link zu einer Netzwerkseite des Zusatzinformationsservers dargestellt werden soll.

Insbesondere ist auch eine Kombination derart vorstellbar, dass die auf der Netzwerkseite darzustellende Zusatzinformation eine direkt darstellbare Information sowie einen Link zu weiterführender Information oder beispielsweise zu auf der Netzwerkseite dazustellender graphischer Information enthält.

In einer vorteilhaften Weiterbildung des Verfahrens wird für die Zuordnung der Profilinformationen zu dem Profil mindestens eine dem Client zugeordnete Kennung ausgewertet. Hierbei wird beispielsweise die dem Client zugeordnete Kennung zusammen mit der Profilinformation an den Profilserver übermittelt. Dies ermöglicht auf besonders einfache Weise die Zuordnung von Profilinformationen zu einem bereits bestehenden bzw. einem neu zu erstellenden Profil.

Vorzugsweise wird das für die Auswahl der Zusatzinformation zu verwendende Profil durch Auswertung einer dem Client zugeordneten Kennung ausgewählt. Die Kennung ermöglicht es folglich, das dem Benutzer bzw. dem Client zugeordnete Profil aufzufinden und dann in Abhängigkeit von einer Auswertung des Profils eine Auswahl der Zusatzinformation vorzunehmen. Hierbei ist es vorstellbar, dass der Informationsserver die Kennung an den Profilserver übermittelt, dieser das Profil auswählt und das ausgewählte Profil an den Informationsserver zurücksendet, eine Zusatzinformation auswählt oder ein angeordnetes Tracking-System zur Auswahl einer Zusatzinformation veranlasst.

Besonders vorteilhaft ist es hierbei, wenn die Kennung aus einem Cookie, einer Gerätenummer oder einer Einwahlnummer gebildet wird. Insbesondere kann vorgesehen sein, dass das Cookie von dem Profilserver bei dem Client gesetzt wird. Eine Gerätenummer kann beispielsweise die Nummer einer Netzwerkkarte sein. Diese ermöglicht eine eindeutige Identifizierung des Clients. Eine Einwahlnummer kann beispielsweise eine dem Benutzer zugeordnete Benutzerkennung sein, mit der sich der Benutzer mittels des ihm zugeordneten Clients beispielsweise über einen Zugangsprovider bei dem Kommunikationsnetzwerk anmeldet.

Dies ermöglicht ferner auch, dass dem Benutzer bzw. dem Client ein Profil zugeordnet werden kann, ohne dass die reale Identität, also beispielsweise Name und Adresse des Benutzers bekannt sind, so dass die Anonymität des Benutzers gewahrt bleiben kann.

Vorzugsweise sind dem Profil mehrere Kennungen zugeordnet. Es kann vorgesehen sein, ein Cookie bei jeder von dem Client initiierten Aktion, also beispielsweise dem Anfordern einer Netzwerkseite, dem Aktivieren eines Links, dem Kauf eines Produkts oder dem Suchen nach Informationen bei dem Client zu setzen. Dies hat den Vorteil, dass die eine Aktivierung eines Links beschreibenden Eigenschaften in dem Cookie bei dem Client abgespeichert werden können und diese Informationen von dem Profilserver auch wieder in Form der bei dem Client gesetzten Cookies abgefragt werden können.
Damit ist es dem Profilserver möglich, die für die Erstellung bzw. das Aktualisieren eines Profils benötigten Informationen unabhängig von dem ersten oder zweiten Informationsserver direkt aus den bei dem Client abgespeicherten Cookies zu extrahieren.

Insbesondere können auch zusätzlich zu den Cookies eine Einwahlnummer oder Gerätenummern zur Identifizierung des Benutzers, des Client oder des Profils herangezogen werden.

Vorteilhafterweise ist dem Profilserver ein Tracking-System zugeordnet.

Es ist heutzutage üblich, dass einer oder mehrere der dem Informationsserver zugeordneten Zusatzinformationsserver einem sogenannten Tracking-System zugeordnet ist. Ein derartiges Tracking-System ist beispielsweise unter http://www.zanox.de oder unter http://www.affilinet.de erreichbar. Ein Tracking-System ermöglicht es einem Informationsserver einerseits, einen oder mehrere der dem Tracking-System zugeordneten Zusatzinformationsserver auszuwählen. Andererseits kann ein Informationsserver dort Zusatzinformationen hinterlegen, die dann von potentiellen, bei dem Tracking-System registrierten Zusatzinformationsservern auf den Netzwerkseiten anderer Informationsserver dargestellt werden können.

Ein Tracking-System verwaltet damit beispielsweise Werbepartner eines Online-Shops. Der Online-Shop selbst muss in diesem Fall nicht notwendigerweise Informationen über die Identität der Werbepartner selbst besitzen. Zweckmäßigerweise wird das Tracking-System den Online-Shop jedoch regelmäßig über die aktuell dem Online-Shop zugeordneten Werbepartner informieren.

Ist einer oder mehrere der dem Informationsserver zugeordneten Zusatzinformationsserver einem Tracking-System zugeordnet, so veranlasst der Informationsserver im Falle der Aktivierung eines Links durch einen Benutzer den Client, alle dort abgelegten Cookies, die von einem dem Tracking-System zugeordneten Zusatzinformationsserver bei dem Client gesetzt wurden, an den jeweiligen Zusatzinformationsserver zu übermitteln. Die Zusatzinformationsserver wiederum, die eine Kopie des bei dem Client gesetzten Cookies von diesem erhalten, senden eine Nachricht an das Tracking-System. Das Tracking-System leitet diese Nachricht an den Profilserver weiter, der daraus ein Profil erstellt bzw. ein Profil aktualisiert. Selbstverständlich ist es vorstellbar, dass sowohl das Tracking-System als auch der Profilserver in Software also in Form von Computerprogrammen realisiert sind. Dabei ist es insbesondere möglich, dass das Tracking-System und der Profilserver auf dem gleichen Computersystem ablaufen und lediglich funktional getrennt sind.

Gemäß einer vorteilhaften Weiterbildung des Verfahrens wird für das Auswählen einer darzustellenden Zusatzinformation mindestens ein der Zusatzinformation zugeordnetes Merkmal ausgewertet. Dies ermöglicht es, die Zusatzinformation nicht nur in Abhängigkeit des Profils des Benutzers, sondern auch in Abhängigkeit von übergeordneten Parametern auszuwählen.

Vorzugsweise beschreibt das Merkmal eine Zeit, eine Zeitspanne, eine Branche, einen Themenbereich, eine Anzahl von Aktivierungen, eine Anzahl von Leads, eine Anzahl von Sales oder eine Conversion.

Eine Zeit beschreibt beispielsweise eine Tageszeit oder eine Jahreszeit, innerhalb derer die Zusatzinformation nicht oder gerade ausgewählt werden soll. Eine Branche beschreibt eine Klassifizierung der Zusatzinformation hinsichtlich eines geschäftlichen Umfeldes. Damit ist es möglich, eine Zusatzinformation besonders dann auszuwählen, wenn der Zusatzinformation eine Branche oder ein Themenbereich zugeordnet ist, die in Einklang mit Informationen des Profils ist.

Soll die Zusatzinformation in Form eines Links auf der Netzwerkseite dargestellte werden, so kann der Zusatzinformation eine Anzahl von Aktivierungen zugeordnet sein, die beschreibt, wie häufig die Zusatzinformation bereits bei früheren Darstellungen auf einer Netzwerkseite aktiviert wurde. Führt die Zusatzinformation zu einem weiteren Informationsserver, beispielsweise einem online-shop, bei dem sich ein Benutzer zur Ansicht von Informationen registrieren muss, so kann mittels der Anzahl von Leads festgestellt werden, wie häufig eine Registrierung stattfand, ohne dass weitere Informationen angefordert wurden, insbesondere ohne dass ein Produkt gekauft wurde. Eine Anzahl von Sales beschreibt, wie häufig aufgrund von einer Darstellung der Zusatzinformation auf einer Netzwerkseite tatsächlich der Verkauf bzw. die Bestellung eines Produkts erfolgt ist. Eine Conversion beschreibt das Verhältnis von innerhalb einer vorgebbaren Zeit erfolgten Leads zu den innerhalb dieser Zeitspanne erfolgten Sales. So kann vorgesehen sein, Zusatzinformation, die ein Produkt eines Online-shops betreffen, nicht mehr darzustellen, wenn es eine besonders hohe Zahl von Leads aber nur eine sehr geringe Anzahl von Sales aufweist. Eine solche Zusatzinformation ist mit hoher Wahrscheinlichkeit nicht relevant, so dass eine Darstellung dieser Information auf einer Netzwerkseite mit hoher Wahrscheinlichkeit zu einer Verschwendung von Ressourcen führen würde.

Gemäß einer besonders bevorzugten Ausführungsform, bei der dem Client ein Softwareelement zugeordnet ist, wird die ausgewählte Zusatzinformation an das Softwareelement über das Kommunikationsnetzwerk übertagen und mittels des Softwareelements wird eine Darstellung der Zusatzinformation veranlasst. Ein derartiges Softwareelement kann beispielsweise der auf dem Client ablaufende Browser sein. Dabei kann vorgesehen sein, dass der Browser die an diesen übermittelte Zusatzinformation in die darzustellende Netzwerkseite integriert. Es kann ferner vorgesehen sein, dass der Browser einen Bereich oder mehrere Bereiche für die Darstellung der Zusatzinformation vorsieht und die Zusatzinformation in diesem Bereich dargestellt wird. Das Softwareelement kann beispielsweise als ein sogenanntes plug-in ausgebildet sein. Bei einem plug-in handelt es sich um eine Softwarekomponente, die einer bestehenden Software hinzugefügt wird und dadurch die Funktionalität der bestehenden Software erweitert.

Diese Ausführungsform hat den Vorteil, dass die Zusatzinformationen direkt an den Client übermittelt werden ohne zuvor an den Informationsserver übermittelt zu werden. Dadurch können nochmals Ressourcen geschont werden. Insbesondere wird die Rechenleistung des Informationsservers weniger belastet und das Kommunikationsnetzwerk wird geringer belastet, da die die Zusatzinformation repräsentierenden Daten nur einmal übermittelt werden müssen.

Vorzugsweise wird die ausgewählte Zusatzinformation von dem Profilserver oder dem Zusatzinformationsserver direkt an den Client übermittelt. Dadurch wird eine weitere Entlastung des Kommunikationsnetzwerks erreicht.

In einer vorteilhaften Weiterbildung des Verfahrens wird die von dem ersten Informationsserver oder die von dem zweiten Informationsserver angeforderte Netzwerkseite in Form eines RSS-Feeds an den Client übermittelt.

RSS ist eine Beschreibungssprache und definiert ein Datenformat, mittels dessen Artikel oder deren Kurzbeschreibungen, beispielsweise Nachrichtenmeldungen, auf einem Informationsserver gespeichert und in maschinenlesbarer Form bereitgestellt werden können. Ein sogenannter RSS-Feed oder Newsfeed besteht aus einer XML-Datei, die lediglich den Inhalt, also beispielsweise die eigentliche Nachricht einer Nachrichtenseite, bereithält, aber keinerlei Layouts oder Design beinhaltet. Viele Seiten, die regelmäßig Artikel publizieren, generieren eine sogenannte RSS-Datei mit den neuesten Artikeln und veröffentlichen diese mittels eines Informationsservers.

Gemäß dieser Weiterbildung ist es einerseits möglich, in Abhängigkeit von einem abonnierten RSS-Feed Profilinformationen über den Benutzer zu generieren, indem beispielsweise die Themen von abonnierten RSS-Feeds bei der Erzeugung des Profils berücksichtigt werden. Andererseits ist es möglich, einem von einem Informationsserver an einen Client übermittelten RSS-Feed Zusatzinformationen beizufügen oder zu veranlassen, dass derartige Zusatzinformationen an den Client übermittelt werden.

Die Aufgabe wird auch gelöst durch ein eingangs genanntes Client-Server-System, bei dem

Von besonderer Bedeutung ist die Realisierung dieser Erfindung in Form eines Computerprogramms. Dabei ist das Computerprogramm auf mindestens einem Rechengerät bzw. einem Computer, insbesondere auf einem Server ablauffähig und zur Ausführung des erfindungsgemäßen Verfahrens programmiert. Insbesondere können zur Ausführung des erfindungsgemäßen Verfahrens Teile des Computerprogramms auf unterschiedlichen Computern ablaufen. Die Erfindung wird also durch das Computerprogramm realisiert, so dass dieses Computerprogramm in gleicher Weise die Erfindung darstellt wie das Verfahren, zu dessen Ausführung das Computerprogramm geeignet ist.

Das Computerprogramm ist vorzugsweise auf einem Speicherelement abgespeichert. Ein Speicherelement kann insbesondere ein Random-Access-Memory, ein Read-Only-Memory oder ein Flash-Memory sein.

Weitere Merkmale, Anwendungsmöglichkeiten und Vorteile der Erfindung ergeben sich aus der nachfolgenden Beschreibung von Ausführungsbeispielen der Erfindung, die in der Zeichnung dargestellt sind. Dabei bilden alle beschriebenen oder dargestellten Merkmale für sich oder in beliebiger Kombination den Gegenstand der Erfindung, unabhängig von ihrer Zusammenfassung in den Patentansprüchen oder deren Rückbeziehung sowie unabhängig von ihrer Formulierung beziehungsweise Darstellung in der Beschreibung beziehungsweise in der Zeichnung. In der Zeichnung zeigen:
- Figur 1: ein erfindungsgemäßes Client-Server-System in einer ersten Ausführungsform;
- Figur 2: ein Ablaufdiagramm eines erfindungsgemäßen Verfahrens in einer ersten Ausführungsform;
- Figur 3: ein erfindungsgemäßes Client-Server-System in einer zweiten Ausführungsform;
- Figur 4: ein Ablaufdiagramm eines erfindungsgemäßen Verfahrens in einer zweiten Ausführungsform.

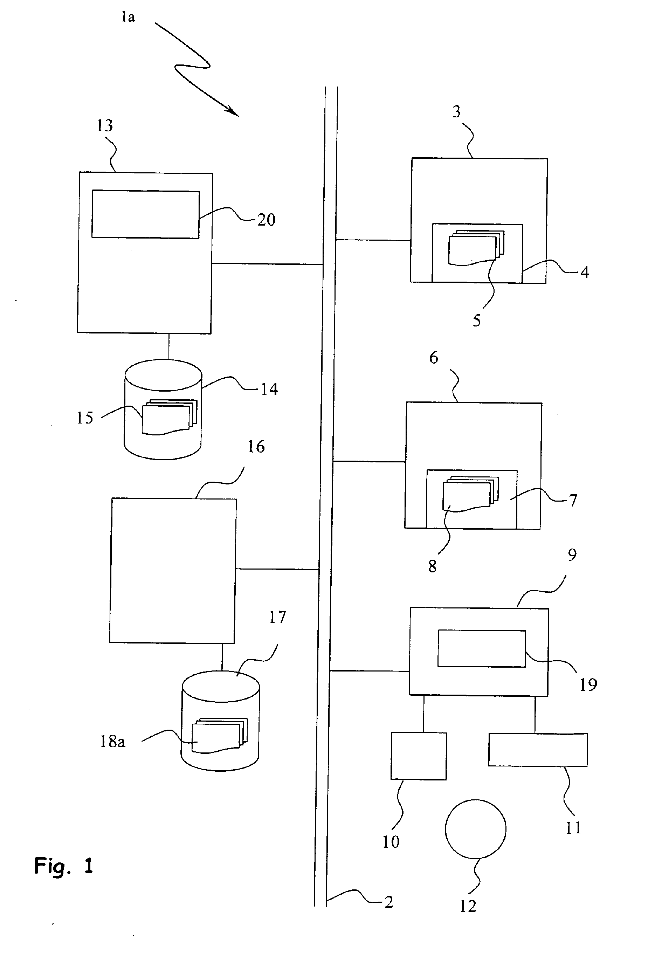

In Figur 1 ist schematisch ein erfindungsgemäßes Client-Server-System 1a dargestellt, das zur Durchführung des erfindungsgemäßen Verfahrens geeignet ist. Das Client-Server-System 1a umfasst ein Kommunikationsnetzwerk 2, das beispielsweise als das Internet ausgebildet ist. Das Kommunikationsnetzwerk 2 kann ebenso gut auch als ein Funknetzwerk ausgebildet sein.

An das Kommunikationsnetzwerk 2 ist ein erster Informationsserver 3 angeschlossen. Der erste Informationsserver 3 weist einen Speicherbereich 4 auf, in dem eine oder mehrere Netzwerkseiten 5 abgespeichert sind.

Das Client-Server-System 1a weist ferner einen mit dem Kommunikationsnetzwerk 2 verbundenen zweiten Informationsserver 6 auf. Der zweite Informationsserver weist ebenfalls einen Speicherbereich 7 auf, in dem eine oder mehrere Netzwerkseiten 8 abgespeichert sind.

Das Client-Server-System 1a weist ferner einen Client 9 auf. Dem Client 9 sind ein Display 10 und ein Eingabegerät 11 zugeordnet. Der Client 9 kann beispielsweise als ein Personal Computer (PC) ausgebildet sein. Der Client 9 kann auch als ein mobiles Telekommunikationsgerät oder als Pocket-Computer (PDA, Handheld) ausgebildet sein. Das Eingabegerät 11 kann beispielsweise als Computertastatur, eine Computermaus, ein Touchpad oder als die Nummerntastatur eines mobilen Telekommunikationsgeräts ausgebildet sein. Das Display 10 und das Eingabegerät 11 dienen der Interaktion zwischen dem Client 9 und einem Benutzer 12.

Mit dem Kommunikationsnetzwerk 2 ist ferner ein Profilserver 13 verbunden. Dem Profilserver 13 ist eine Datenbank 14 zugeordnet. In der Datenbank 14 ist mindestens ein Profil 15 abgespeichert.

Das Client-Server-System 1a weist ferner einen Zusatzinformationsserver 16 auf, dem eine Datenbank 17 zugeordnet ist. In der Datenbank 17 sind Zusatzinformationen 18a abgespeichert.

Auf den einzelnen Komponenten des Client-Server-Systems, insbesondere auf dem Profilserver 13, dem ersten Server 3, dem zweiten Server 6, dem Zusatzinformationsserver 16 sowie auf dem Client 9 laufen jeweils Computerprogramme ab, die eine Kommunikation der Komponenten untereinander ermöglicht.

Beispielsweise läuft auf dem Client 9 ein Browser 19 ab, der es ermöglicht, Eingaben des Benutzers 12 auszuwerten und in eine Anforderung einer Netzwerkseite umzuwandeln. Ferner ermöglicht es der Browser 19, dass eine von dem Client 9 empfangene Netzwerkseite 5, 8 interpretiert wird und auf dem Display 10 dem Benutzer 12 zur Ansicht dargestellt wird. Auf dem Profilserver 13 läuft ein Expertensystem 20 ab. Das Expertensystem 20 kann beispielsweise als regelbasiertes Expertensystem 20 ausgebildet sein.

In Figur 1 ist die Funktionsweise des Client-Server-Systems 1 in einem ersten Ausführungsbeispiel dargestellt. Das Verfahren beginnt in einem Schritt 100. In einem Schritt 101 fordert der Client 9 von dem zweiten Informationsserver 6 eine Netzwerkseite 8 an. Dies kann beispielsweise dadurch erfolgen, dass der Benutzer 12 mittels des Eingabegeräts 11 eine URL in ein dem Browser 19 zugeordnetes Eingabefenster eingibt. Der Browser 19 veranlasst daraufhin den Client 9, vom dem zweiten Informationsserver 6 die durch die URL adressierte Netzwerkseite 8 anzufordern. Der zweite Informationsserver 6 veranlasst daraufhin, dass die von dem Client 9 angeforderte Netzwerkseite 8 an den Client 9 mittels des Kommunikationsnetzwerks 2 übermittelt wird.

In einem Schritt 102 wird eine Profilinformation an den Profilserver 13 von dem zweiten Informationsserver 6 übermittelt. Eine Profilinformation kann hierbei beispielsweise ein der an den Client 9 übermittelten Netzwerkseite 8 zugeordneter Überbegriff sein, der den Inhalt der Netzwerkseite 8 beschreibt. Beispielsweise sind hierzu die auf dem zweiten Informationsserver 6 abgespeicherten Netzwerkseiten 8 nach vorgebaren Kriterien klassifiziert. Derartige Kriterien können Überbegriffe sein, die den Inhalt der Netzwerkseiten beschreiben. Ist der zweite Informationsserver 6 als eine Suchmaschine ausgebildet, so kann das Kriterium auch der von dem Benutzer 12 mittels des Client 9 an die Suchmaschine übermittelte Suchbegriff sein. Ist der zweite Informationsserver 6 eine Produktsuchmaschine, so kann das Kriterium die Bezeichnung eines gesuchten oder dargestellten Produkts selbst oder ein Oberbegriff des Produkts sein. Ist der zweite Informationsserver 6 ein online-shop, so kann das Kriterium eine Branche sein, innerhalb derer der online-shop Waren anbietet, bzw. der ein von dem Benutzer 12 gekauftes Produkt zuzuordnen ist. Weitere Kriterien können Informationen über den Benutzer selbst sein. Derartige Informationen werden beispielsweise von einem online-shop bei der Bestellung eines Produkts ermittelt und können Name, Adresse, Geschlecht und Alter umfassen.

Ist der zweite Informationsserver 6 als ein Online-Forum ausgebildet, so können die Kriterien die Oberbegriffe von Artikeln sein, die der Benutzer gelesen bzw. zu denen er etwas geschrieben hat. Viele Online-Foren setzen für die aktive Teilnahme eine Registrierung des Benutzers voraus. Die dort angegebenen Daten können ebenfalls als Profilinformation verwendet werden.

Die Kriterien können auch eine Informationsart beschreiben. So kann beispielsweise eine Netzwerkseite in Abhängigkeit davon klassifiziert werden, ob auf der Netzwerkseite Textinformationen, Bildinformationen oder Videoinformationen dargestellt sind.

Fordert der Benutzer 12 weitere Netzwerkseiten 8 von dem zweiten Informationsserver 6 an, so können auch hiervon Profilinformationen an den Profilserver 13 übermittelt werden. Insbesondere ist es vorstellbar, auch ein Verhalten des Clients 9 bzw. des Benutzers 12 derart in die Profilinformationen einzubeziehen, dass beispielsweise die Zeitdauer zwischen der Anforderung zweier Netzwerkseiten 8 protokolliert wird. Aus dieser Zeitdauer kann dann geschlossen werden, ob der Benutzer 12 die zuerst an den Client 9 übermittelte Netzwerkseite 8 näher betrachtet haben kann, ob die dort dargestellte Information also von grundlegender Relevanz für den Benutzer 12 war, oder ob der Benutzer 12 nach nur sehr kurzer Zeitdauer eine weitere Netzwerkseite 8 von dem zweiten Informationsserver 6 angefordert hat, die zuerst übermittelte Netzwerkseite folglich von nur geringer Relevanz für den Benutzer 12 war. Hierbei können einzelne oder mehrere Netzwerkseiten 8 durch Links miteinander verknüpft sein, so dass der Benutzer 12 durch aktivieren eines auf einer Netzwerkseite 8 dargestellten Links automatisch eine weitere Netzwerkseite 8 von dem zweiten Informationsserver 6 anfordert. Verweilt ein Benutzer 12 nur sehr kurz auf einer Netzwerkseite 8, bevor er die nächste Netzwerkseite 8 von dem zweiten Informationsserver 6 anfordert, und fordert der Benutzer diese nächste Netzwerkseite 8 dadurch an, dass er einen auf der zuerst angeforderten Netzwerkseite 8 dargestellten Link aktiviert, so kann trotz der nur kurzen Verweildauer der zuerst angeforderten Netzwerkseite eine gewisse Relevanz für den Benutzer 12 zugeordnet werden, da immerhin der dort dargestellte Link für den Benutzer 12 von Bedeutung war.

Insbesondere eine Auswertung der aufgrund der Aktivierung des Links angeforderten folgenden Netzwerkseite 8 kann Kriterien für die Erzeugung einer Profilinformation liefern.

In einem Schritt 103 erstellt der Profilserver 13 anhand der ihm von dem zweiten Informationsserver 6 übermittelten Profilinformation ein Profil 15, das den Client 9 bzw. dem Benutzer 12 zugeordnet werden kann. Das Erstellen des Profils 15 soll hier insbesondere auch die Aktualisierung eines bereits bestehenden Profils 15 umfassen. In Abhängigkeit von vorgebaren Regeln des Expertensystems 20 werden die für das Profil 15 vorliegenden Profilinformationen ausgewertet und zu einem Profil 15 verknüpft. Hierbei können insbesondere Verfahren aus der künstlichen Intelligenz angewendet werden. Das von dem Profilserver 13 erstellte Profil 15 wird in der Datenbank 14 abgespeichert.

In einem Schritt 104 fordert der Client 9 von dem ersten Informationsserver 3 eine Netzwerkseite 5 an. Dies kann beispielsweise wiederum dadurch geschehen, dass der Benutzer 12 mittels des Eingabegeräts 11 einen Link aktiviert, der auf einer dem Benutzer 12 bereits dargestellten Netzwerkseite 5, 8 dargestellt ist oder dadurch, dass der Benutzer 12 mittels des Eingabegeräts 11 eine URL eingibt.

Zumindest der erste Informationsserver 3 ist derart ausgebildet, dass er eine von dem Client 9 angeforderte Netzwerkseite 5 mit mindestens einer Zusatzinformation 18a versieht. Zur Auswahl einer geeigneten Zusatzinformation 18a fordert der erste Informationsserver 3 zunächst von dem Profilserver 13 das dem Client 9 bzw. dem Benutzer 12 zugeordnete Profil 15 an. Dies erfolgt in dem Schritt 105. Der Profilserver 13 übermittelt daraufhin das angeorderte Profil 15 an den ersten Informationsserver 3.

In einem Schritt 106 wertet der erste Informationsserver 3 das von dem Profilserver 13 erhaltene Profil 15 aus. Hierzu kann beispielsweise in dem Profil 15 eine Angabe darüber enthalten sein, für welche Themen sich der Benutzer 12 in letzter Zeit besonders interessiert hat. Es ist ebenso vorstellbar, dass das Profil 15 Informationen darüber enthält, welche Produkte sich der Benutzer 12 bei einem Online-Shop in der vergangenen Zeit angesehen, zum Kauf vorgemerkt, gekauft oder gerade nicht gekauft hat.

In einem Schritt 107 fordert der erste Informationsserver 3 in Abhängigkeit von der in dem Schritt 106 durchgeführten Auswertung des Profils 15 von dem Zusatzinformationsserver 16 eine dem Profil 15 entsprechende Zusatzinformation 18a über das Kommunikationsnetzwerk 2 an. Hierbei wird davon ausgegangen, dass die in der Datenbank 17 abgespeicherten Zusatzinformationen 18a nach bestimmten, dem ersten Informationsserver 3 bekannten, Kriterien geordnet sind. Der Zusatzinformationsserver 16 wählt in Abhängigkeit von der Anfrage des ersten Informationsservers 3 die passende Zusatzinformation aus und übermittelt diese in einem Schritt 108 an den ersten Informationsserver 3.

In einem Schritt 109 veranlasst der erste Informationsserver 3, dass die ihm von dem Zusatzinformationsserver 16 übermittelte Zusatzinformation 18a in die von dem Client 9 angeforderte Netzwerkseite aufgenommen wird. Dies kann beispielsweise dadurch geschehen, dass in der Netzwerkseite 5 ein Bereich für die Aufnahme einer oder mehrerer Zusatzinformationen 18a vorgesehen ist. Die Zusatzinformation 18a kann beispielsweise ein Link zu einer anderen Netzwerkseite sein, die von dem ersten Informationsserver 3, von dem zweiten Informationsserver 6 oder einem anderen Informationsserver abrufbar ist. Hierbei kann vorgesehen sein, dass der Link mit einer textuellen oder graphischen Information ergänzt wird. Die Zusatzinformation ist beispielsweise ein sogenanntes Werbebanner, das mittels einer textuellen und/oder grafischen Darstellung für ein über einen Online-Shop zu beziehendes Produkt oder eine über einen Online-Shop vermittelte Dienstleistung wirbt.

In einem Schritt 110 wird die um die Zusatzinformation 18a angereicherte Netzwerkseite 5 über das Kommunikationsnetzwerk 2 an den Client 9 übermittelt. In einem Schritt 111 wird das Verhalten des Clients 9 bzw. des Benutzers 12 nach der Übermittlung der Netzwerkseite 5 ausgewertet. Hierbei kann insbesondere berücksichtigt werden, wie der Benutzer 12 auf die Zusatzinformationen reagiert. Hierzu ist die Zusatzinformation 18a beispielsweise mit einem Link versehen, der von dem Benutzer 12 aktiviert werden kann. Eine derartige Aktivierung kann von dem ersten Informationsserver 3 protokolliert werden. Hieraus kann eine Profilinformation generiert werden, die in einem Schritt 112 ebenfalls an den Profilserver 13 zur Aktualisierung des Profils 15 des Clients 9 bzw. des Benutzers 12 herangezogen werden kann.

Gemäß einer anderen Ausführungsform wird abweichend von den Schritten 109 und 110 die Zusatzinformation nicht in durch den Client 9 von dem ersten Informationsserver 3 angeforderte Netzwerkseite 5, 8 integriert, sondern die Zusatzinformation wird getrennt von der angeforderten Netzwerkseite 5, 8 an den Client 9 übermittelt. Der Client 9 weist hierzu geeignete Mittel zur Darstellung der Zusatzinformation auf. Dies kann beispielsweise dadurch realisiert sein, dass auf dem Client 9 eine Software implementiert abläuft, die eine Darstellung der Zusatzinformation ermöglicht. Eine Darstellung kann hierbei zusammen mit der von dem Informationsserver 3 übermittelten Netzwerkseite 5, 8 beispielsweise mittels des Browsers erfolgen. Hierbei kann die Software beispielsweise in Form eines sogenannten plug-ins in den Browser integriert sein. Eine Darstellung kann insbesondere auch in einem gesonderten Bereich des Browsers erfolgen. Hierbei ist es vorstellbar, dass die Darstellung zeitunabhängig von der Darstellung der angeforderten Netzwerkseite 5, 8 erfolgt.

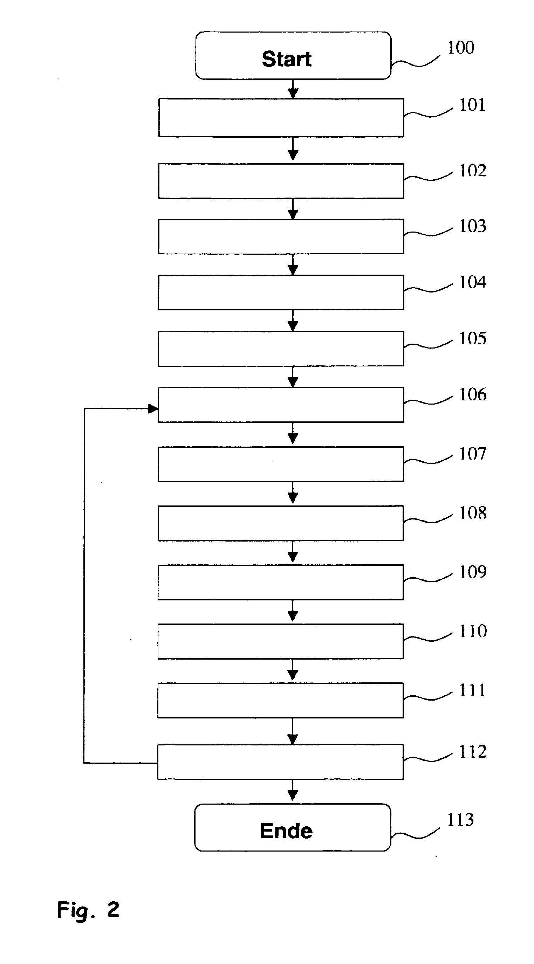

Es ist folglich vorstellbar, dass die Zusatzinformation eine gewisse Zeit vor oder nach der Darstellung der Netzwerkseite 5, 8 auf dem Client 9 dargestellt wird. Beispielsweise kann sich eine Zeitverzögerung der Darstellung der Zusatzinformation dadurch ergeben, dass die Zusatzinformation erst wie in Figur 2 dargestellt ermittelt werden muss. Eine Zeitverzögerung der Darstellung der Zusatzinformation kann aber auch bewusst vorgegeben werden.

Insbesondere ist es vorstellbar, dass die Zusatzinformation nicht von dem ersten Informationsserver 3 an den Client 9 übermittelt wird, sondern direkt von dem Profilserver 13 oder dem Zusatzinformationsserver 16 an den Client 9 übermittelt wird und von dem Client 9 zusammen mit der Netzwerkseite 5, 8 oder unabhängig von dieser dem Benutzer 12 dargestellt wird.

Ist der zweite Informationsserver 6 als Suchmaschine realisiert, so kann die Eingabe eines Suchbegriffs durch den Benutzer 12 mittels des Client 9 und die Übermittlung des Suchbegriffs an den zweiten Informationsserver 6 eine Profilinformation erstellt werden, die von dem Profilserver 13 zur Erzeugung bzw. der Aktualisierung eines Profils verwendet wird. Fordert der Benutzer zu einem späteren Zeitpunkt von dem ersten Informationsserver 3 eine Netzwerkseite 5 an, so kann eine Zusatzinformation ausgewählt werden, die den vormalig verwendeten Suchbegriff berücksichtigt. Beispielsweise kann dem Benutzer 12 mittels des Clients dann ein Werbebanner angezeigt werden, das in thematischer Beziehung zu dem vormalig eingegebenen Suchbegriff steht. Das Werbebanner kann dann in einem gesonderten Bereich des Browsers 19 dargestellt werden oder in die angeforderte Netzwerkseite 5 integriert werden.

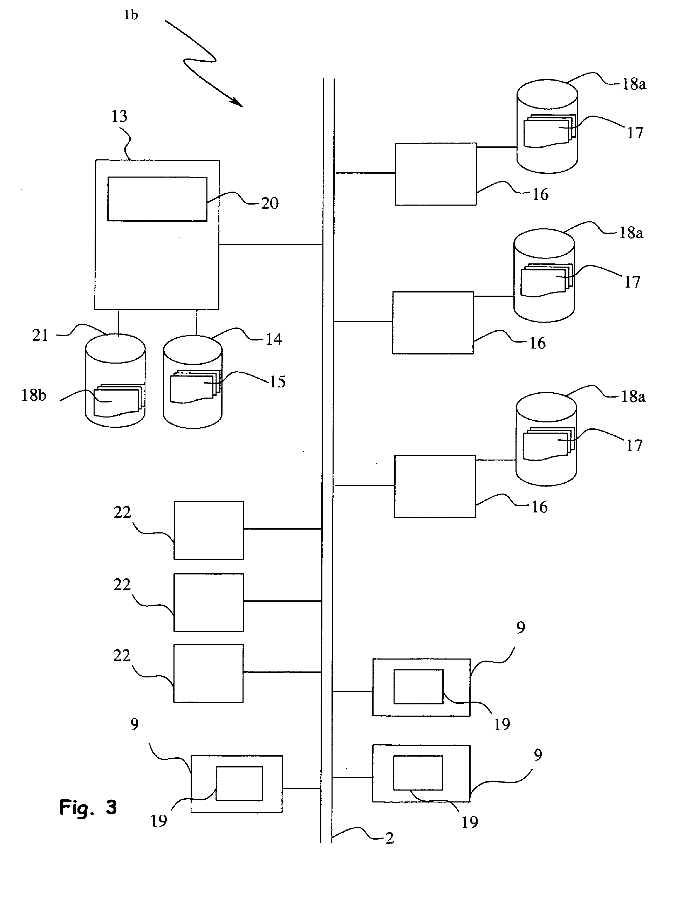

In Figur 3 ist ein weiteres Ausführungsbeispiel eines erfindungsgemäßen Client-Server-Systems 1b dargestellt.

Das in Figur 3 dargestellte Client-Server-System 1b weist ein Kommunikationsnetzwerk 2, einen Client 9 und einen Profilserver 13 auf. Der Client 13 ist entsprechend dem in Figur 1 dargestellten Client 13 ausgebildet. Dem Profilserver 13 ist eine Datenbank 15 zugeordnet, in der mindestens ein Profil 15 abgespeichert ist. Dem Profilserver 13 ist ferner eine Datenbank 21 zugeordnet, in der Zusatzinformationen 18b abgespeichert sind.

Das Client-Server-System 18b weist mehrere Zusatzinformationsserver 16 auf, denen jeweils eine Datenbank 17 zugeordnet ist, in der Zusatzinformationen 18a abgespeichert sind. Die Zusatzinformationsserver 16 sind mit dem Kommunikationsnetzwerk 2 verbunden.

Das Client-Server-System 18b weist mehrere Informationsserver 22 auf. Die Informationsserver 22 können die Funktionalität des in Figur 1 dargestellten ersten Informationsservers 3 oder des in Figur 1 dargestellten zweiten Informationsservers 6 aufweisen. Insbesondere kann mindestens ein Informationsserver 22 beide Funktionalitäten aufweisen. Das bedeutet, dass ein Informationsserver 22 sowohl Profilinformationen an den Profilserver 13 übermitteln kann, als auch Zusatzinformation 18a, 18b auf einer von dem Client 9 angeforderten Netzwerkseite 5, 8 darstellen kann. Jeder der Informationsserver 22 kann unabhängig von den anderen beispielsweise als ein Online-Shop, eine Suchmaschine, eine Produktsuchmaschine, ein Newsserver oder ein Online-Forum ausgebildet sein.

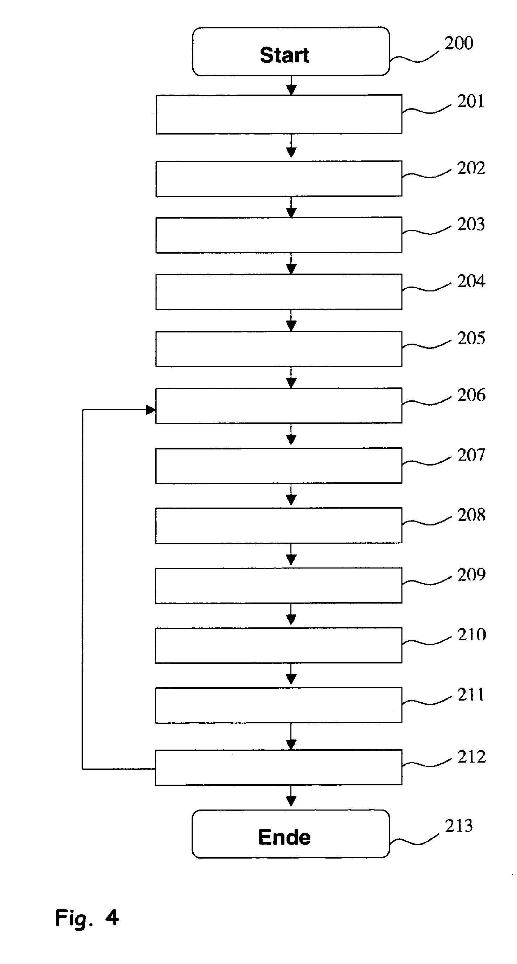

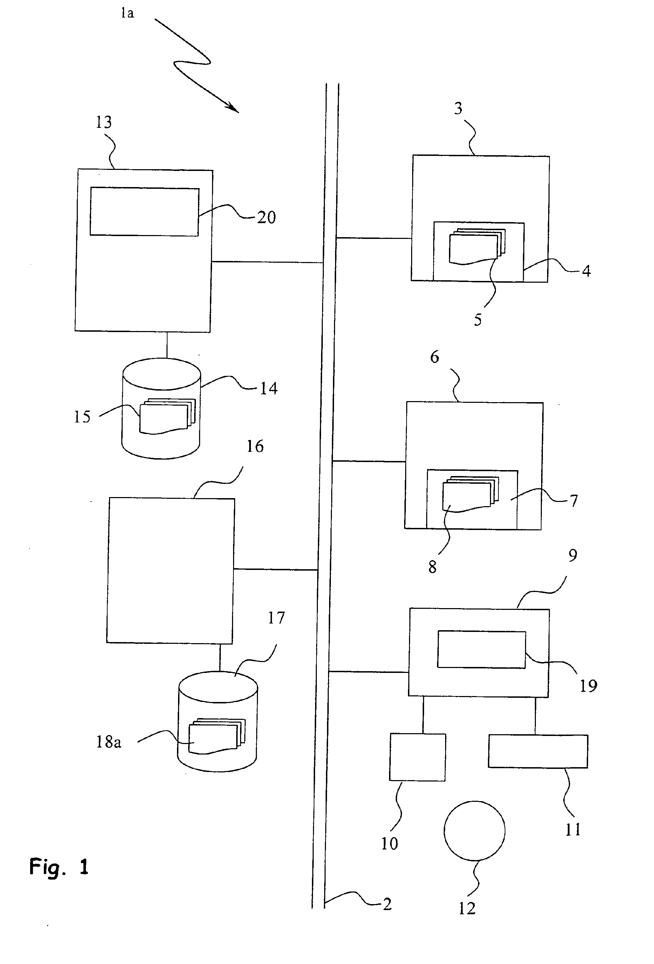

In Figur 4 ist das erfindungsgemäße Verfahren ausgehend von dem in Figur 3 dargestellten Client-Server-System 18b in einem weiteren Ausführungsbeispiel dargestellt.

Das in Figur 4 dargestellte Verfahren startet in einem Schritt 200. In einem Schritt 201 fordert der Client 9 von einem der Informationsserver 22 eine Netzwerkseite 5, 8 an.

In einem Schritt 202 veranlasst der Informationsserver 22 den Profilserver 13, eine Kennung zu generieren und bei dem Client 9 ein Cookie zu setzen. Dies kann beispielsweise dadurch geschehen, dass die Netzwerkseite 5, 8 durch Aktivieren eines auf einer zuvor angeforderten Netzwerkseite dargestellten Links erfolgt, wobei dem Link ein Verweis in Form einer URL zu dem Profilserver 13 zugeordnet ist und diese URL auf ein Skript verweist, so dass ein Aktivieren des Links eine Ausführung des auf dem Profilserver 13 abgespeicherten Skripts bewirkt. Das Abarbeiten dieses Skripts wiederum kann die Generierung eines Cookies zur Folge haben und dieses an den Client 9 übermitteln.

In einem Schritt 203 übermittelt der Informationsserver 22 eine Profilinformation an den Profilserver 13. Dies kann beispielsweise in Abhängigkeit von der zuvor von dem Client 9 bei dem Informationsserver 22 angeforderten Netzwerkseite 5, 8 erfolgen. Die Profilinformation kann beispielsweise ein bei dem Informationsserver 22 gekauftes Produkt, ein eingegebener Suchbegriff, ein Thema eines Online-Forums, eine Branche eines Online-Shops, Alter und Geschlecht des Benutzers 12, ein nicht gekauftes Produkt oder eine abgerufene Information sein.

In einem Schritt 204 erzeugt der Profilserver 13 ein neues Profil 15. Ist bereits ein Profil für den Benutzer 12 vorhanden, so aktualisiert der Profilserver 13 das bestehende Profil. Dabei kann beispielsweise vorgesehen sein, dass alle oder bestimmte Profilinformationen, deren Erhebung länger als eine vorgegebene Zeitspanne zurückliegt, gelöscht und bei der Erzeugung bzw. Aktualisierung des Profils 15 nicht weiter berücksichtigt werden. Das erhöht beispielsweise die Adaptionsfähigkeit der Profilerzeugung und erlaubt es, auf geänderte Gewohnheiten, Bedürfnisse oder Interessen des Benutzers 12 flexibel zu reagieren. Das erzeugte Profil 15 wird dann in der Datenbank 14 abgespeichert. Die Datenbank 14 kann beispielsweise als ein Speicherbereich in einem Arbeitsspeicher ausgebildet sein.

In einem Schritt 205 fordert der Client 9 eine weitere Netzwerkseite 5, 8 von einem der Informationsserver 22 an. Dabei muss sich der Informationsserver 22 nicht von dem Informationsserver 22 unterscheiden, von dem der Client 22 zuvor eine Netzwerkseite 5, 8 angefordert hat.

In einem Schritt 206 wird analog zu dem Schritt 202 von dem Profilserver 13 eine Kennung erzeugt bzw. die dem Client 9 zugeordnete Kennung mittels einer Anforderung des bei dem Client 9 abgespeicherten Cookies ermittelt.

In einem Schritt 207 wird analog zu dem Schritt 203 eine Profilinformation von dem Informationsserver 22, von dem der Client 9 gerade in dem Schritt 205 eine Netzwerkseite 5, 8 angefordert hat, an den Profilserver 13 übermittelt.

In einem Schritt 208 wird analog zu dem Schritt 204 ein Profil aktualisiert bzw. erzeugt.

In einem Schritt 209 wählt der Profilserver 13 eine Zusatzinformation aus, die auf der in dem Schritt 205 von dem Client 9 angeforderten Netzwerkseite 5, 8 dargestellt werden soll. Hierzu wertet der Profilserver 13 das bei diesem abgespeicherte und mittels der in dem Schritt 206 ermittelten Kennung dem Client 9 zugeordnete Profil 15 aus. Hierzu können aus dem Profil 15 Schlüsselwörter extrahiert werden, nach denen dann in den Zusatzinformationsservern 16 nach geeigneten Zusatzinformationen 18a gesucht werden kann. Ist dem Profilserver 13 eine Datenbank 21 zugeordnet, in der Zusatzinformationen 18b abgespeichert sind. Die Datenbank 21 ermöglicht es dem Profilserver 13, direkt in der Datenbank 21 nach Zusatzinformationen 18b suchen, die dem vorliegenden Profil 15 hinreichend entsprechen. Zur Bestimmung, ob eine Zusatzinformation 18a, 18b einem Profil 15 entspricht bzw. wie gut es entspricht, können bekannte Verfahren aus dem Bereich der Informationsgewinnung (information retrieval) und der automatisierten Klassifizierung (automatic classification; document clustering, keyword clustering) herangezogen werden, mittels derer beispielsweise sogenannte matching functions entwickelt und angewendet werden können.

Der Profilserver 13 kann beispielsweise als ein Tracking-System ausgebildet sein. Die in der Datenbank 21 abgespeicherten Zusatzinformation 18b können hierbei Werbeinformationen sein, die in Form von Werbebannern auf den von einem Informationsserver 22 an den Client 9 übermittelten Netzwerkseite 5,8 dargestellt werden.

In einem Schritt 210 wird die ausgewählte Zusatzinformation 18a, 18b an den Informationsserver 22 übermittelt. Dieser stellt die ausgewählte Zusatzinformation auf der zu erstellenden Netzwerkseite 5, 8 dar. Dabei kann die Zusatzinformation insbesondere als ein Link zu einer weiteren Netzwerkseite ausgebildet sein, die von demselben oder einem anderen Informationsserver 22 bereitgestellt wird.

In einem Schritt 211 wird die mit der Zusatzinformation 18a, 18b versehene, von dem Client 9 in dem Schritt 205 angeforderte Netzwerkseite 5, 8 an den Client 9 über das Kommunikationsnetzwerk 2 übermittelt.

In einem Schritt 212 aktiviert der Benutzer 2 einen auf der in dem Schritt 211 übermittelten Netzwerkseite 5, 8 dargestellten Link an. Dies kann beispielsweise der mittels der Zusatzinformation 18a, 18b dargestellte Link sein. Der Link ist derart ausgestaltet, dass eine Nachricht an den Profilserver 13 übermittelt wird, die eine Aktivierung dieses Links anzeigt. Dies kann von dem Profilserver 13 als eine Profilinformation ausgewertet werden und in dem Profil 15 entsprechend abgelegt werden.

Ist die Zusatzinformation 18a, 18b ein Werbebanner und führt der dadurch dargestellte Link zu einem Produkt eines Online-Shops, so kann der Kauf dieses Produkts ebenfalls als Profilinformation ausgewertet werden. Hierbei kann beispielsweise in dem Profil vermerkt werden, weiterhin Links zu dem Online-Shop anzuzeigen, beispielsweise um verfügbares Zubehör zu dem gekauften Produkt hinzuweisen. Gleichzeitig kann aber auch vorgesehen sein, genau keine weitere Werbebanner zu diesem Shop auf einer von dem Client 9 angeforderten Netzwerkseite 5, 8 anzuzeigen, weil es beispielsweise höchst unwahrscheinlich ist, dass der Benutzer 12, beispielsweise aufgrund eines besonders kleinen Warensortiments des Online-Shops, in absehbarer Zeit nochmals einen Kauf bei dem Online-Shop zu tätigen beabsichtigt.

Das Verfahren kann dann in einem Schritt 213 enden. Vorzugsweise jedoch wird das Verfahren in dem Schritt 206 dadurch fortgesetzt, dass auch das weitere Verhalten des Benutzers 12 zur Erzeugung und Aktualisierung des dem Benutzer 12 zugeordneten Profils 15 ausgewertet wird. Dadurch kann ein besonders aktuelles Profil erhalten werden.

Ein erster konkreter Ablauf des erfindungsgemäßen Verfahrens könnte beispielsweise wie folgt aussehen:
Der Benutzer 12 baut mittels des als Notebook ausgebildeten Clients 9 eine Verbindung zu dem als das Internet ausgebildeten Kommunikationsnetzwerk 2 auf und kauft über den als Online-Shop ausgebildeten zweiten Informationsserver 6 ein Produkt. Bei dem Kauf wird eine Profilinformation erzeugt, die Informationen über das Produkt - beispielsweise die Bezeichnung des Produkts selbst und dessen Preis - über den Benutzer - beispielsweise dessen Alter und Geschlecht - und über den Kauf selbst - Zahlung mit Kreditkarte oder per Nachnahme sowie Datum des Kaufs - enthält.

Diese Profilinformation wird an den Profilserver 13 übermittelt, in geeigneter Weise aufbereitet und in der Datenbank 14 abgespeichert.

Fordert der Benutzer 12 nun von dem als Suchmaschine ausgebildeten ersten Informationsserver 3 einige Stunden oder Tage später eine Netzwerkseite 5 an, so fordert der erste Informationsserver 3 von dem Profilserver 13 das dem Benutzer zugeordnete Profil 15 an. Zur Auswahl des Profils 15 benötigt der Profilserver 13 eine Identifizierung des Benutzers 12. Dies kann beispielsweise mittels der von dem

Benutzer 12 bei dem Kauf übermittelten persönlichen Daten erfolgen.

Eine Identifizierung des Benutzers 12 kann auch dadurch erfolgen, dass eine dem Client 9 zugeordnete, eindeutige Gerätenummer, beispielsweise die Nummer einer in dem Client 9 vorhandenen sogenannten Netzwerkkarte, die bei der Anforderung einer Netzwerkseite 5, 9 an den Informationsserver 3, 6 automatisch übermittelt wird, von dem Informationsserver 3, 6 an den Profilserver 13 übermittelt wird und von diesem zusammen mit dem Profil 15 in der Datenbank 14 abgespeichert wird.

Eine Identifizierung des Benutzers 12 kann insbesondere auch dadurch erfolgen, dass der Client 9 bei dem Aufruf einer Netzwerkseite 5, 9 von dem Informationsserver 3, 6 dazu veranlasst wird, ein Cookie zu setzen. Die für das Setzen des Cookies notwendigen Informationen können von dem Informationsserver 3, 6 an den Client 9 übermittelt werden. Ein Cookie ist üblicherweise derart realisiert, dass es nur an den Informationsserver 3, 6 zurückgeschickt werden kann, der den Client 9 zum Setzen des Cookies veranlasst hat. Fordert der Client 9 erneut eine Netzwerkseite 5, 8 von dem Informationsserver 3, 6 an, so kann das Cookie zusammen mit der Anforderung von dem Client 9 an den Informationsserver 3, 6 übermittelt werden.

Besonders vorteilhaft ist es hierbei, wenn das Setzen des Cookies von dem Profilserver 13 veranlasst wird. Dies kann beispielsweise dadurch erreicht werden, dass der Informationsserver 3, 6, von dem der Client 9 eine Netzwerkseite anfordert, dem Profilserver 13 die Daten übermittelt, die für eine Übermittlung von Informationen an den Client 9 notwendig sind. Dies ist beispielsweise die Netzwerkadresse des Clients 9. Diese Adresse wird in Abhängigkeit des verwendeten Übertragungsprotokolls von dem Client 9 bei der Anforderung einer Netzwerkseite 5, 8 von dem Informationsserver 3, 6 an den Netzwerkseite 3, 6 übermittelt. Dies ermöglicht es dem Informationsserver 3, 6, die von dem Client 9 angeforderte Netzwerkseite 5, 8 an den Client 9 zu übermitteln.

Ist dem Profilserver 13 diese Adresse bekannt, kann er eine Nachricht an den Client 9 senden und diesen dadurch veranlassen, ein Cookie zu setzen. Dieses Cookie kann beispielsweise eine von dem Profilserver 13 erzeugte Kennung sein. Fordert der Benutzer 12 mittels des Client 13 von demselben oder einem anderen Informationsserver 3, 6 eine Netzwerkseite 5, 8 an, so wird der Profilserver 13 veranlasst, von dem Client 9 das bei diesem abgespeicherte Cookie anzufordern. Durch Auslesen des Cookies erhält der Profilserver 13 dann die dem Client 13 bzw. dem Benutzer 12 zugeordnete Kennung und kann anhand dieser das diesem zugeordnete Profil aus der Datenbank 14 auswählen.

Fordert der Client 9 beispielsweise eine Netzwerkseite 5, 8 von einem Informationsserver 3, 6 durch Aktivieren eines auf einer anderen Netzwerkseite dargestellten Links an, so kann vorgesehen sein, dass bei der Aktivierung des Links automatisch eine Nachricht an den Profilserver 13 gesendet wird und auf dem Profilserver 13 dadurch ein Skript ausgeführt wird, das den Profilserver 13 veranlasst, eine Nachricht an den Client 9 zu senden, damit der Client 9 eine in dieser Nachricht enthaltene Information, also beispielsweise die von dem Profilserver 13 erzeugte Kennung, in Form eines Cookies in einem dem Client 9 zugeordneten Speicherbereich abspeichert.

Fordert ein Informationsserver 3, 6 von dem Profilserver 13 ein Profil an, so fordert der Profilserver zunächst das bei dem Client 9 gesetzte Cookie an und kann anhand der in dem Cookie abgespeicherten Kennung das diesem zugeordnete Profil aus der Datenbank 14 auswählen.

In dem Profil kann nun vermerkt sein, welches Produkt der Benutzer 12 zuvor gekauft hat. Als Zusatzinformation kann dann beispielsweise ein Link zu einem Zubehör in die neu angeforderte Netzwerkseite integriert werden.

Hat der Benutzer beispielsweise einen Staubsauger gekauft, so kann eine Zusatzinformation in Form eines Links zu einem Anbieter von Ersatzbeuteln in eine nach dem Kauf angeforderte Netzwerkseite integriert werden.

Hat der Benutzer in einer Suchmaschine nach dem Begriffen "Hausbau" gesucht, können ihm Informationen von Anbietern von Baustoffen oder Tipps zum Hausbau als Zusatzinformation übermittelt werden.

Gemäß eines weiteren Ausführungsbeispiels wird das Profil 15 nicht in der dem Profilserver 13 zugeordneten Datenbank 15 abgespeichert, sondern direkt in dem Cookie, das bei dem dem Benutzer 12 zugeordneten Client 9 abgespeichert wird. Wird dem Profilserver eine neue Profilinformation von einem Informationsserver 22 übermittelt, so aktualisiert der Profilserver 13 das dem Client 9 zugeordnete Profil und veranlasst, dass das Profil durch das Setzen eines neuen, aktuellen Cookies bei dem Client 9 aktualisiert wird.

Die in den Figuren 2 und 4 dargestellten Ausführungsformen sind selbstverständlich lediglich beispielhafte Ausführungsformen. So ist es insbesondere möglich, mehrere Schritte zusammenzufassen, einzelne Schritte auszutauschen, oder gar aufzuheben und die Funktionalität einzelner Schritte zu verändern, solange der der Erfindung zugrundeliegende Erfindungsgedanke verwirklicht wird.

Beispielsweise kann vorgesehen sein, dass die in den Schritten 108 und 210 erfolgte Übermittlung der Zusatzinformation nicht an den ersten Informationsserver 3 oder an einen der Informationsserver 22 erfolgt, sondern direkt an den Client 9 übermittelt wird. Dies kann beispielsweise dadurch geschehen, dass der Profilserver 13 die Zusatzinformation 18b aus der ihm zugeordneten Datenbank 21 auswählt und diese an den Client 9 übermittelt, wo sie durch den Browser mittels eines plug-ins in die darzustellende Netzwerkseite integriert wird oder in einem eigens dafür vorgesehenen Bereich dargestellt wird. Es ist auch möglich, dass der Profilserver 13 den Zusatzinformationsserver 16 veranlasst, die Zusatzinformation direkt an den Informationsserver 3, 22 oder direkt an den Client 9 zu übermitteln.

## Patentansprüche

1. Verfahren zur Übermittlung von Informationen von einem ersten Informationsserver (3) an einen Client (9), wobei
- der erste Informationsserver (3) und der Client mit einem Kommunikationsnetzwerk (2) verbunden sind,
- dem Client ein Profil (15) zugeordnet wird,
- mindestens ein Zusatzinformationsserver (16) mit dem Kommunikationsnetzwerk (2) verbunden ist,
- durch den Zusatzinformationsserver (16) mindestens eine Zusatzinformation (18a; 18b) zum Abruf bereitstellt wird,
- mittels des Client von dem ersten Informationsserver (3) eine Netzwerkseite (5) über das Kommunikationsnetzwerk (2) angefordert wird,
- in Abhängigkeit von dem dem Client (9) zugeordneten Profil (15) eine Zusatzinformation (18a; 18b) ausgewählt wird; und
- die angeforderte Netzwerkseite (5) und die Zusatzinformation (18a; 18b) an den Client übermittelt werden;
**dadurch gekennzeichnet, dass** mindestens ein zweiter Informationsserver (6) mit dem Kommunikationsnetzwerk (2) verbunden ist, das Profil (15) von einem mit dem Kommunikationsnetzwerk (2) verbundenen Profilserver (13) erstellt wird und zur Erstellung des Profils mindestens eine Profilinformation ausgewertet wird, wobei die Profilinformation in Abhängigkeit mindestens einer Eigenschaft einer von dem zweiten Informationsserver an den Client (9) übermittelten Netzwerkseite (8) ermittelt wird.

2. Verfahren nach Anspruch 1, **dadurch gekennzeichnet, dass** der erste Informationsserver (3, 6) und/oder der zweite Informationsserver (3, 6) als eine Suchmaschine, eine Produktsuchmaschine, ein online-shop, ein online-forum oder ein Newsserver ausgebildet ist.

3. Verfahren nach einem der vorangehenden Ansprüche, **dadurch gekennzeichnet, dass** der Profilinformation eine Bedingung zugeordnet wird und die Profilinformation für die Erstellung des Profils (15) nur dann berücksichtigt wird, wenn die Profilinformation die Bedingung erfüllt.

4. Verfahren nach einem der vorangehenden Ansprüche, **dadurch gekennzeichnet, dass** die mindestens eine Eigenschaft der von dem zweiten Informationsserver an den Client (9) übermittelten Netzwerkseite (8) einen Inhalt, einen Themenbereich, einen Ursprung, eine Zeitdauer, eine durchgeführte Aktion oder eine nicht durchgeführte Aktion beschreibt.

5. Verfahren nach einem der vorangehenden Ansprüche, **dadurch gekennzeichnet, dass** der erste Informationsserver (3, 6) das Profil (15) von dem Profilserver (13) anfordert, der Profilserver (13) das Profil (15) an den Informationsserver (3, 6) übermittelt und der Informationsserver (3, 6) die Zusatzinformation (18a; 18b) auswählt.

6. Verfahren nach einem der Ansprüche 1 bis 4, **dadurch gekennzeichnet, dass** der erste Informationsserver (3, 6) von dem Profilserver (13) die Zusatzinformation (18a; 18b) anfordert, wobei der Profilserver (13) die Zusatzinformation (18a; 18b) auswählt.

7. Verfahren nach einem der Ansprüche 1 bis 4, **dadurch gekennzeichnet, dass** der Profilserver (13) das Profil (15) an den Zusatzinformationsserver (16) übermittelt und der Zusatzinformationsserver (16) die Auswahl der Zusatzinformation (18a; 18b) in Abhängigkeit von dem Profil (15) durchführt.

8. Verfahren nach einem der vorangehenden Ansprüche, **dadurch gekennzeichnet, dass** zur Zuordnung einer Profilinformationen zu einem Profil (15) mindestens eine dem Client (9) und/oder dem Benutzer (12) zugeordnete Kennung ausgewertet wird und das für die Auswahl der Zusatzinformation (18a; 18b) zu verwendende Profil (15) durch Auswertung der Kennung ausgewählt wird.

9. Verfahren nach Anspruch 8, **dadurch gekennzeichnet, dass** die Kennung aus einem Cookie, einer Gerätenummer, einer Softwarenummer oder einer Einwahlnummer gebildet wird.

10. Verfahren nach einem der vorangehenden Ansprüche, **dadurch gekennzeichnet, dass** für die Auswahl einer darzustellenden Zusatzinformation (18a; 18b) mindestens ein der Zusatzinformation (18a; 18b) zugeordnetes Merkmal ausgewertet wird.

11. Verfahren nach einem der vorangehenden Ansprüche, **dadurch gekennzeichnet, dass** das Merkmal eine Zeit, eine Zeitspanne, eine Branche, einen Themenbereich, eine Anzahl von Aktivierungen, eine Anzahl von Leads, eine Anzahl von Sales oder eine Conversion beschreibt.

12. Verfahren nach einem der vorangehenden Ansprüche, **dadurch gekennzeichnet, dass** der Client (9) ein Softwareelement aufweist, die ausgewählte Zusatzinformation (18a; 18b) an das Softwareelement über das Kommunikationsnetzwerk (2) übermittelt wird und mittels des Softwareelements eine Darstellung der Zusatzinformation (18a; 18b) veranlasst wird.

13. Verfahren nach einem der vorangehenden Ansprüche, **dadurch gekennzeichnet, dass** die von dem ersten Informationsserver (3) oder von dem zweiten Informationsserver (6) angeforderte Netzwerkseite (8) in Form eines RSS-Feeds an den Client (9) übermittelt wird.

14. Client-Server-System (1a; 1b) umfassend einen einem Benutzer (12) zugeordneten Client, einen ersten Informationsserver, einen Zusatzinformationsserver (16) und ein Kommunikationsnetzwerk, mittels dessen eine Kommunikation zwischen dem Client (9) und dem ersten Informationsserver (3) möglich ist, wobei
- das Client-Server-System (1a; 1b) Mittel zur Zuordnung eines Profils zu dem Client (9) aufweist,
- der Zusatzinformationsserver (16) mit dem Kommunikationsnetzwerk (2) verbunden ist,
- der Zusatzinformationsserver (16) mindestens eine Zusatzinformation (18a; 18b) zum Abruf bereitstellt,
- der Client (9) Mittel aufweist, um von dem ersten Informationsserver (3) eine Netzwerkseite (5) über das Kommunikationsnetzwerk (2) anzufordern,
- das Client-Server-System (1a; 1b) Mittel aufweist, um eine Zusatzinformation (18a; 18b) in Abhängigkeit von dem dem Client (9) zugeordneten Profil (15) auszuwählen; und
- das Client-Server-System (1a; 1b) Mittel aufweist, um die angeforderte Netzwerkseite (5) mit der Zusatzinformation (18a; 18b) von dem ersten Informationsserver (3) an den Client (9) zu übermitteln,
**dadurch gekennzeichnet, dass**
- das Client-Server-System (1a; 1b) mindestens einen zweiten Informationsserver (6) aufweist;
- der zweite Informationsserver (3, 6) mit dem Kommunikationsnetzwerk (2) verbunden ist;
- das Client-Server-System (1a; 1b) einen Profilserver (13) aufweist;
- der Profilserver (13) Mittel zur Erstellung eines Profils in Abhängigkeit von der Auswertung mindestens einer Profilinformation aufweist;
- das Client-Server-System (1a; 1b) Mittel aufweist, um die Profilinformation in Abhängigkeit mindestens einer Eigenschaft einer von dem zweiten Informationsserver (6) an den Client (9) übermittelten Netzwerkseite (8) zu ermitteln.

15. Client-Server-System (1a; 1b) nach Anspruch 14, **dadurch gekennzeichnet, dass** die mindestens eine Eigenschaft der von dem zweiten Informationsserver (6) an den Client (9) übermittelten Netzwerkseite (8) einen Inhalt, einen Themenbereich, einen Ursprung, eine Zeitdauer, eine durchgeführte Aktion oder eine nicht durchgeführte Aktion beschreibt.

16. Client-Server-System (1a; 1b) nach einem der Ansprüche 14 oder 15, **dadurch gekennzeichnet, dass** dem Client (9) und/oder dem Benutzer (12) eine Kennung zugeordnet ist, das Client-Server-System (1a; 1b) Mittel zur Zuordnung der Profilinformation zu dem Profil (15) in Abhängigkeit von einer Auswertung der Kennung aufweist und die Kennung aus einem Cookie, einer Gerätenummer, einer Softwarenummer oder einer Einwahlnummer gebildet ist.

17. Client-Server-System (1a; 1b) nach einem der Ansprüche 14 bis 16, **dadurch gekennzeichnet, dass** das Client-Server-System (1a; 1b) Mittel zur Auswahl einer darzustellenden Zusatzinformation (18a; 18b) in Abhängigkeit von einer Auswertung mindestens eines der Zusatzinformation (18a; 18b) zugeordneten Merkmals aufweist, wobei das Merkmal eine Zeit, eine Zeitspanne, eine Branche, einen Themenbereich, eine Anzahl von Aktivierungen, eine Anzahl von Leads, eine Anzahl von Sales oder eine Conversion beschreibt.

18. Client-Server-System (1a; 1b) nach einem der Ansprüche 14 bis 17, **dadurch gekennzeichnet, dass** der Client (9) ein Softwareelement aufweist, das geeignet ist, eine an dieses Softwareelement übermittelte ausgewählte Zusatzinformation (18a; 18b) zu empfangen und eine Darstellung der Zusatzinformation (18a; 18b) zu veranlassen.

19. Client-Server-System (1a; 1b) nach einem der Ansprüche 14 bis 18, **dadurch gekennzeichnet, dass** das Client-Server-System (1a; 1b) Mittel zur Übermittlung der von dem ersten Informationsserver (3) oder von dem zweiten Informationsserver (6) angeforderten Netzwerkseite (8) an den Client (9) in Form eines RSS-Feeds aufweist.

20. Profilserver (13) in einem Client-Server-System (1a; 1b), wobei,
- das Client-Server-System (1a; 1b) einen einem Benutzer (12) zugeordneten Client, einen ersten Informationsserver, einen Zusatzinformationsserver (16) und ein Kommunikationsnetzwerk (2) umfasst
- der Profilserver (13) Mittel zur Zuordnung eines Profils zu dem Client (9) aufweist,
- der Zusatzinformationsserver (16) mit dem Kommunikationsnetzwerk (2) verbunden ist,
- der Zusatzinformationsserver (16) mindestens eine Zusatzinformation (18a; 18b) zum Abruf bereitstellt,
- der Client (9) Mittel aufweist, um von dem ersten Informationsserver (3) eine Netzwerkseite (5) über das Kommunikationsnetzwerk (2) anzufordern,
- das Client-Server-System (1a; 1b) Mittel aufweist, um eine Zusatzinformation (18a; 18b) in Abhängigkeit von dem dem Client (9) zugeordneten Profil (15) auszuwählen; und
- das Client-Server-System (1a; 1b) Mittel aufweist, um die angeforderte Netzwerkseite (5) mit der Zusatzinformation (18a; 18b) von dem ersten Informationsserver (3) an den Client (9) zu übermitteln,
**dadurch gekennzeichnet, dass** der Profilserver (13) Mittel zur Ausführung eines Verfahrens nach einem der Ansprüche 1 bis 13 aufweist.

21. Computerprogramm, das auf einem Client-Server-System (1a; 1b), insbesondere auf einem Client (9) und/oder auf einem Server ablauffähig ist, **dadurch gekennzeichnet, dass** das Computerprogramm derart programmiert ist, dass ein Verfahren nach einem der Ansprüche 1 bis 14 durchgeführt wird, wenn das Computerprogramm auf dem Client-Server-System (1a; 1b) ausgeführt wird.

22. Computerprogramm nach Anspruch 21, **dadurch gekennzeichnet, dass** das Computerprogramm auf einem Speicherelement abgespeichert ist, wobei das Speicherelement als Diskette, Compact Disk (CD), Digital Versatile Disk (DVD), und/oder mindestens ein mindestens einer Komponente des Client-Server-Systems (1a; 1b) zugeordneter Speicherbereich ausgebildet ist.
